Europäisches Patentamt

European Patent Office

Office européen des brevets

(11) Veröffentlichungsnummer: **0 481 314 A2**

# EUROPÄISCHE PATENTANMELDUNG

(21) Anmeldenummer: **91117020.7**

(51) Int. Cl.5: **F16G  15/02**

(22) Anmeldetag: **07.10.91**

(30) Priorität: **19.10.90 DE 4033311**

(43) Veröffentlichungstag der Anmeldung:
**22.04.92 Patentblatt  92/17**

(84) Benannte Vertragsstaaten:
**ES GB NL SE**

(71) Anmelder: **Schulte, Christoph**
**Hakenbrinkweg 6**
**W-5768 Sundern - Langscheid(DE)**

(72) Erfinder: **Schulte, Christoph**
**Hakenbrinkweg 6**
**W-5768 Sundern - Langscheid(DE)**

(74) Vertreter: **Fritz, Edmund Lothar, Dipl.-Chem.**
**et al**
**Patentanwaltskanzlei Fritz Mühlenberg 74**
**W-5760 Arnsberg 1(DE)**

(54) **Verbindungsschäkel für eine Rundglieder-Stegkette.**

(57)  Der Schäkel besteht aus zwei gleichen Schäkelteilen begrenzt durch längsgerichtete ebene Flächen, derart, daß die Schäkelteile in Längsrichtung zusammengeschoben werden können. Die beiden Schäkelteile sind im Prinzip U-förmig mit gleich langen Schenkeln. Der eine Schenkel (6) bildet jeweils eine flach gewölbte Längsseite, der andere Schenkel ist als Stumpf (20) ausgebildet. Beide Stümpfe bilden einen Steg zwischen den Kettenaufnahmen (1). In Richtung der Querachse (7) ist ein Bolzen durch Bohrungen in den Schenkeln und in den Stümpfen gesteckt. Der Bolzen ist durch Stifte (10) gesichert. Der Vorteil besteht in der Einfachheit der spanabhebenden Bearbeitung der geschmiedeten oder gegossenen Schäkelteile gegenüber dem bekannten Kenterschäkel.

Fig.1

Die Erfindung bezieht sich auf einen Verbindungsschäkel für eine Rundglieder-Stegkette nach dem Oberbegriff des Patentanspruchs.

Verbindungsschäkel dieser Art sind insbesondere für die Verbindung von Abschnitten von Ankerketten vorgesehen. Der Schäkel hat zwei durch einen Quersteg getrennte Augen, jeweils zur Aufnahme eines Rundgliedes der Kette. Er besteht aus zwei zusammensetzbaren und gegebenenfalls wieder lösbaren gleichen Schäkelhälften. Hinsichtlich der Festigkeit und Belastungsfähigkeit bestehen strenge Vorschriften. Nach dem Stand der Technik sind seit Jahrzenten die sogenannten Kenterschäkel bekannt mit zwei gleichen im Prinzip U-förmigen geschmiedeten oder gegossenen Schäkelteilen, die an den Enden der Schenkel derartige Profilierungen bzw. Ausnehmungen haben, daß sie durch Zusammenschieben in Querrichtung miteinander verbunden werden können. Der Steg wird durch ein zusätzlich quer eingeschobenes Mittelteil gebildet, das durch einen schräg zur Querachse gesteckten Stift gesichert ist.

Die Aufgabe der Erfindung besteht in der Entwicklung eines Verbindungsschäkels gleicher Art wie der vorgenannte Stand der Technik, mit gleicher Belastungsfähigkeit, jedoch konstruktiv einfacher im Hinblick auf die wirtschaftliche Herstellung.

Diese Aufgabe wird durch einen Verbindungsschäkel mit den Merkmalen nach dem Patentanspruch gelöst.

Bei einem solchen Schäkel sind die beiden miteinander zu verbindenden Schäkeiteile gleichfalls im Prinzip U-förmige Schmiedeteile oder Gußteile, deren Schenkel jedoch gleichlang sind und die durch ebene längslaufende Flächen derart begrenzt sind, daß man sie in Längsrichtung schlittenartig durch Zusammenschieben zusammensetzen kann. Eines besonderen zusätzlichen Mittelteils für den Steg bedarf es in diesem Falle nicht, da der Steg sich beim Zusammenschieben durch zwei jeweils angeformte Steghälften in Gestalt von Stümpfen bildet. Entlang der Querachse nehmen die beiden Schäkelteile einen Bolzen auf, für dessen Aufnahme in den Stümpfen und in den außenliegenden Schenkeln Bohrungen gebildet sind. Dieser Bolzen ist entsprechend seiner Aufgabe, die Zugkräfte aufzunehmen, bemessen. Er ist durch quer eingesteckte Stifte gesichert. Die Schäkelteile können als Schmiedeteile oder Gußteile hergestellt werden. Für die Bildung der ebenen Flächen an den Schenkeln ist nur eine relativ einfache und unkomplizierte spanabhebende Bearbeitung notwendig.

Nach ausführlichen analytischen Untersuchungen steht ein Verbindungsschäkel nach der Erfindung im Bezug auf Festigkeit dem Eingangs genannten Stand der Technik nicht nach.

Im folgenden wird ein Ausführungsbeispiel der Erfindung beschrieben unter Bezugnahme auf die beiliegenden Zeichnungen.

Fig. 1 ist eine Draufsicht auf ein gebrauchsfertiges Verbindungsschäkel für eine Rundglieder-Stegkette nach der Erfindung;

Fig. 2 ist eine dementsprechende Ansicht von oben;

Fig. 3 ist eine Ansicht der beiden Schäkelteile im einzelnen, von der Seite gesehen;

Fig. 4 ist eine Ansicht in Richtung Pfeil IV von Fig. 3;

Fig. 5 ist ein Schnitt nach V-V von Fig. 3;

Fig. 6 ist eine Ansicht in Richtung Pfeil VI von Fig. 3.

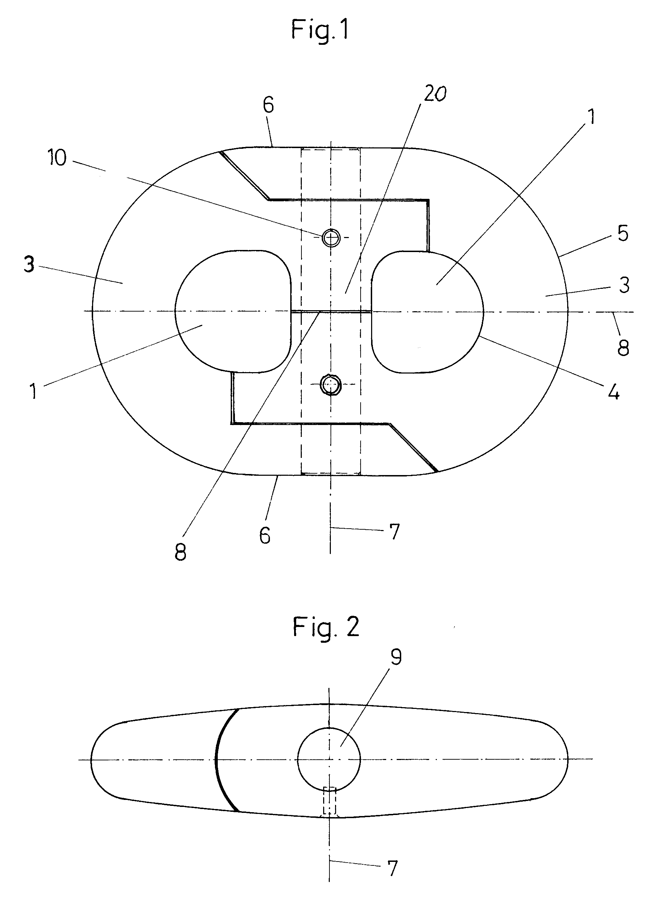

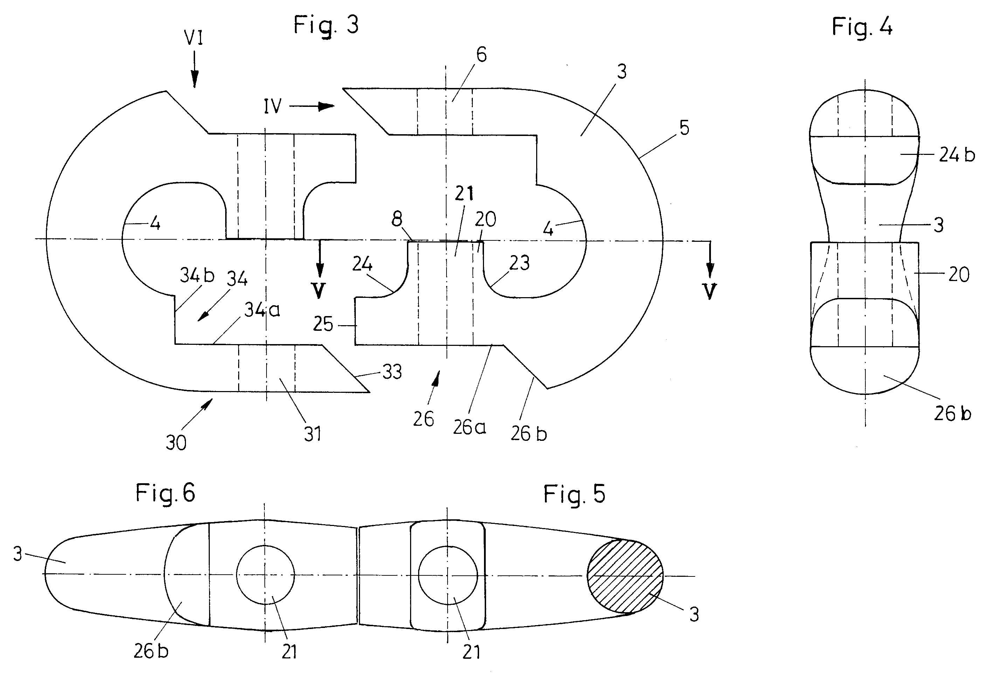

Das Verbindungsschäkel hat, wie aus Fig. 1 ersichtlich, insgesamt eine langgestreckt-gerundete, also angenäherd elliptische Form, bei dem zwei Augen 1 zur Aufnahme jeweils eines Kettengliedes gebildet sind, getrennt durch einen Steg 2 mit Achse 7, quer zu einer Mittelebene 8. Entlang der Querachse 7 ist ein Bolzen 9 in entsprechende Bohrungen eingesteckt. Der Bolzen ist durch Stifte 10 quer zur Bolzenachse gesichert. Der Steg 2 besteht aus zwei Steghälften 20 (Stümpfe), die in der Mittelebene 8 aneinanderstoßen. Jedes Auge ist durch einen Halbkreis-Bogenabschnitt 3 querseitig begrenzt, wobei der Halbkreis-Bogenabschnitt 3 jeweils einen Kreisquerschnitt hat. Im Bereich der Querachse 7 und im Bereich der geraden bzw. flach gebogenen Längsseiten 6 ist die Breite des Verbindungsschäkels größer als der Durchmesser der Halbkreis-Bogenabschnitte 3. Das Verbindungsschäkel, wie auf Fig. 1 und 2 dargestellt, ist aus zwei gleichen Halbteilen zusammengesetzt, wie sie einzeln auf Fig. 3 im Zusammenhang mit den weiteren Figuren 4, 5 und 6 dargestellt sind. Jedes Schäkelteil ist im Prinzip U-förmig, wobei sich an den Halbkreis-Bogenabschnitt 3 zwei gleichlange U-Schenkel anschließen. Ein Schenkel bildet den flachen längsseitigen Abschnitt 6. Er ist durch eine Ausnehmung 34 etwa auf die halbe Dicke reduziert, wobei diese Ausnehmung durch eine Längsebene 34a bestimmt ist, welche in eine Querebene 34b übergeht. Diese schließt an einen Halbkreis-Innenbogen 4 an. Der Schenkel ist übrigens stirnseitig durch eine schräge Ebene 33 begrenzt.

Der gegenüberliegende Schenkel hat eine Ausnehmung 26 zur Aufnahme des Schenkels 30 mit korrespondierenden Flächen, nämlich einer Längsebene 26a, einer Stirnebene 25 und einer schrägen Ebene 26b, welche in den Halbkreis-Außenbogen 5 übergeht.

Am Schenkel mit der Ausnehmung 26 ist zur Mittelebene 8 hin ein Stumpf 20 gebildet. Er hat, wie aus Fig. 5 hervorgeht, einen rechteckigen Grundriß und bildet eine Steghälfte. Der Stumpf 20 ist an der einen Seite durch einen Bogen 23 begrenzt, der in den Halbkreis-Innenbogen 4 übergeht. An der gegenüberliegenden Seite ist der Stumpf durch einen Viertelkreisbogen 24 begrenzt, der in den Halbkreis-Innenbogen 4 des anderen Schäkelteils übergeht. Die beiden Schäkelteile werden in der auf Fig. 3 dargestellten Anordnung zusammengeschoben bis die jeweiligen Querachsen 7 in Deckung sind. Dann kann durch Bohrungen 31 in den Schenkeln 30 sowie durch Bohrungen 21 in den Stümpfen 20 ein Steckbolzen 9 eingeschoben werden, der durch querliegende Stifte 10 gesichert ist.

**Patentansprüche**

1. Verbindungsschäkel für eine Rundglieder-Stegkette, das die Form eines langgestreckt-runden Kettengliedes hat mit zwei Augen, getrennt durch einen Steg, und das aus zwei gleichen durch Zusammenschieben miteinander verbundenen im Prinzip U-förmigen Schäkelteilen besteht, gekennzeichnet, durch die nachfolgend genannten Merkmale:
   - beide Schenkel sind gleichlang;
   - ein Schenkel (30) bildet eine flach gewölbte Längsseite (6) des Schäkels und ist innenseitig durch eine Ausnehmung (34) etwa auf die Hälfte seiner Dicke reduziert, wobei diese Ausnehmung durch eine Längsebene (34a) und eine Querebene (34b) bestimmt ist;
   - das Ende des Schenkels (30) ist durch eine Schrägebene (33) bestimmt;
   - am anderen Schenkel ist außenseitig eine Ausnehmung (26) gebildet, zur Aufnahme des die flach gewölbte Längsseite (6) bildenden Schenkels;
   - der Schenkel mit der Ausnehmung (26) ist entlang einer Querachse (7) in Gestalt eines Stumpfes (20) fortgesetzt, der einen rechteckigen Grundriß hat und an einer Mittelebene (8) endigt;
   - entlang der Querachse (7) ist durch Bohrungen (21, 31) in den Stümpfen und in den Schenkeln ein durch Stifte (10) gesicherter Bolzen (9) gesteckt, der entsprechend seiner Aufgabe zur Kräfteübertragung bemessen ist.

# Fig.1

# Fig. 2

Fig. 4

Fig. 3

Fig. 5

Fig. 6